# EUROPEAN PATENT SPECIFICATION

(11) **EP 3 679 085 B1**
(45) Date of publication and mention of the grant of the patent: **30.06.2021**
(21) Application number: 18759133.4
(22) Date of filing: 31.08.2018
(51) Int. Cl.: C08G 65/48

(54) **MODIFIED POLYARYL ETHER KETONES**
MODIFIZIERTE POLYARYLETHERKETONE
POLYARYLÉTHERCÉTONES MODIFIÉES

(30) Priority: 04.09.2017 IN 201721031304; 31.10.2017 EP 17199303
(43) Date of publication of application: 15.07.2020
(73) Proprietor: Solvay Specialty Polymers Italy S.p.A., 20021 Bollate (MI) (IT)
(72) Inventor: AHUJA, Ritu, Singapore Singapore 648305 (SG); KAPELYUSHKO, Valeriy, 15121 Alessandria AL (IT); PAWAR, Gajanan Manohar, Vadodara 390008 (IN); MILLEFANTI, Stefano, 21049 Tradate VA (IT); NARDELE, Chinmay, Vadodara Gujarat 390008 (IN)
(74) Representative: Benvenuti, Federica
(86) International application number: PCT/EP2018/073434
(87) International publication number: WO 2019/043141

(56) References cited:
- NOISET OLIVIER ET AL: "Surface modification of poly(aryl ether ether ketone) (PEEK) film by covalent coupling of amines and amino acids through a spacer arm", JOURNAL OF POLYMER SCIENCE, POLYMER CHEMISTRY EDITION, INTERSCIENCE PUBLISHERS, NEW YORK, NY, US, vol. 35, no. 17, 1 December 1997 (1997-12-01), pages 3779-3790, XP002180806, ISSN: 0360-6376
- MARCHAND-BRYNAERT J: "SURFACE MODIFICATIONS AND REACTIVITY ASSAYS OF POLYMER FILMS AND MEMBRANES BY SELELCTIVE WET CHEMISTRY", RECENT RESEARCH DEVELOPMENTS IN POLYMER SCIENCE, TRANSWORLD RESEARCH NETWORK, IN, vol. 2, no. 2, 1 January 1998 (1998-01-01) , pages 335-362, XP001032906,
- MARCHAND-BRYNAERT J ET AL: "Surface fluorination of PEEK film by selective wet-chemistry", POLYMER, ELSEVIER SCIENCE PUBLISHERS B.V, GB, vol. 38, no. 6, 1 March 1997 (1997-03-01), pages 1387-1394, XP004055782, ISSN: 0032-3861, DOI: 10.1016/S0032-3861(96)00661-1 cited in the application

## Description

### Technical Field

The present invention provides modified polyaryl ether ketones (PAEK)s having fluorinated moieties incorporated therein.

The present invention also relates to a method for covalently attaching fluorinated moieties onto the surface of PAEK, said method comprising reducing the ketone groups of the PAEK to hydroxyl groups to obtain a modified PAEK and then reacting the hydroxyl groups with a compound bearing a fluorinated moiety.

### Background Art

Poly(aryl ether ketone)s (PAEK)s are highly crystalline thermoplastic polymers used in a wide range of applications where there is a need for high temperature performance and good chemical resistance.

Like many other polymeric materials, PAEKs exhibit a hydrophobic, chemically inert surface nature, which is problematic in adhesion, coating, painting, coloring, biocompatibility, etc.

The success of any polymeric material for a certain application relies largely upon the properties of its surface, which acts as the phase boundary residing between the bulk polymer and the outer environment. Therefore, for a particular target application the regulation of the polymer surface interaction with other media in contact is of prime importance. To date, mainly two different strategies have been explored for specifically tuning the surface properties of PAEK, which include exposure to high-energy species (plasmas, ozone, UV light, electrons, and γ-rays) and wet chemical methods. High-energy species have been applied mainly to improve adhesion whereas wet chemical methods have been utilized to effect rational control over surface chemical properties through selective organic surface transformations.

Several methods are known in the literature to prepare surface functionalized PAEK derivatives.

For example, WO 2017/117087 (Cytec Industries Inc.) 6/07/2017 discloses PAEK surface treatment which comprises fluoro-oxidation that can be carried out by exposing polymeric particles to a reactive fluorine gas source and an oxidation source.

In another approach, the ketone functional group of PAEK may be subjected to a number of transformations, such as reduction, and the aromatic backbone may undergo electrophilic reactions. Via such reactive chemical methods, polymerizable moieties may be covalently bound to PAEK surfaces.

US 2012/0255894 (Universitet Innsbruck) 11/10/2012 describes the covalent attachment of styrenic polymeric monoliths to the surface of a poly(ether ether ketone) (PEEK) via reduction of the ketone group of the PEEK to a hydroxyl group, followed by attaching a polymer or a polymerizable mixture. Said PEEK-polymeric monoliths derivatives are described for use as stationary phases in the pharmaceutical quality control and medical diagnosis.

Incorporation of fluorine moieties into polyether polymers is attracting considerable attention due to the unique surface properties of the resulting materials, which can represent a huge improvement for use in certain applications.

MARCHAND-BRYNAERT, "Surface fluorination of PEEK film by selective wet-chemistry". Polymer, 1997, vol.38, no.6, p.1387-1394, discloses selective surface fluorination of PEEK films using the wet-chemistry technique. Films of PEEK including hydroxyl groups, obtained by surface reduction of native PEEK films, were used as intermediate for introducing fluorine atoms, trifluorobenzamide groups or fluorinated alkylic moieties such as heptadecafluorodecane on the surface of PEEK films. In particular, the introduction of fluorinated alkylic moieties was carried out via Williamson etherification by reacting the sodium salt of reduced PEEK with an iodine derivative of the fluorinated alkyl moiety. However, very low yields are reported for said fluorination processes.

It would be advantageous to have modified polyaryl ether ketones polymers having surfaces grafted by hydrophobic and oleophobic fluorinated moieties, thus introducing a variety of surface properties to be combined with the known thermal/mechanical properties of PAEK that can be prepared by an efficient and versatile process.

### Summary of invention

The Applicant has now surprisingly found that the PAEK surface properties can be tuned by grafting different fluorinated moieties on the surface of PAEK through an efficient process that provides modified PAEK for use in applications wherein the properties of fluorine moieties are combined with the high performance PAEK.

It is thus a first object of the present invention to provide fluorinated PAEK [F-PAEK] wherein at least 1% moles of the recurring units are recurring units of formula (I), 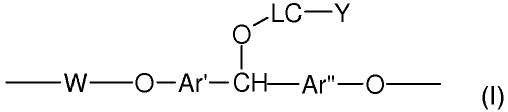 the remaining recurring units having formula (R_{PAEK}) 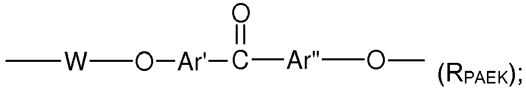
the sum of recurring units (I) and (R_{PAEK}) being 100% moles;
Ar' and Ar", equal to or different from each other, are aromatic groups;
W is an aromatic group selected from groups of formulae (W-I) to (W-III): 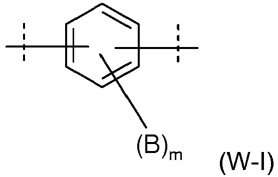 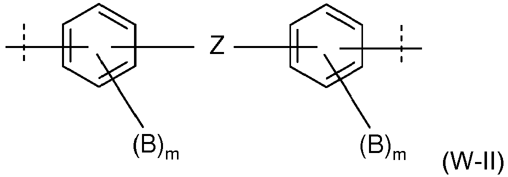 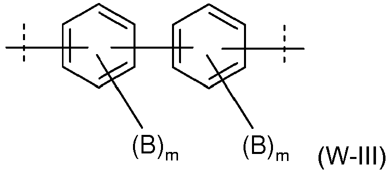
wherein B is a hydrogen of or a fluorine atom and m is an integer from 0 to 4;
Z is an optionally fluorinated alkylic or aromatic radical.
Y is at least one fluorinated moiety selected from the group consisting of fluorinated alkyl, fluorinated heteroalkyl, fluorinated aryl or a low/medium molecular weight fluorinated polymeric or oligomeric moiety;
LC is absent or is a linking chain consisting of one or more of the following, connected together: -C(O)-, alkylene or arylene;
with the proviso that when W is an aromatic radical of formula (W-I) and LC is alkylene, Y cannot be a fluorinated alkyl.

The invention further pertains to a method for manufacturing the F-PAEK as above detailed, said method comprising:
(i) reducing the ketone groups of a PAEK to hydroxyl groups to obtain a reduced PAEK [PAEK-OH];
(ii) reacting the PAEK-OH obtained in step (i) with a fluorinated compound capable of providing a radical, said fluorinated compound having formula

   Y-LC-X [fluorinated compound (FC)],

   wherein Y and LC are as above defined, and X is a group selected from a halogen atom and a hydroxyl group.

The described method can be applied to PAEK in the form of powder or film as well as on molded parts made of PAEK to achieve surface grafting.

The Applicant found that, advantageously, the F-PAEK of the present invention can be useful in many applications wherein high thermal/mechanical properties are combined with modified surface properties to get hydrophobic and oleophobic fluorinated surface to get improved properties such as better chemical resistance and lubricated surface.

In a further aspect, thus, the present invention relates to articles comprising the F-PAEK as above defined.

### Description of embodiments

### PAEK

As used herein, the expression "poly(aryl ether ketone)" or PAEK is hereby used to denote any polymer comprising recurring units (R_{PAEK}) comprising a -W-O-Ar'-C(=O)-Ar"-O- group,
where Ar' and Ar", equal to or different from each other, are aromatic groups, and
W is an aromatic group selected from groups of formulae (W-I) to (W-III): 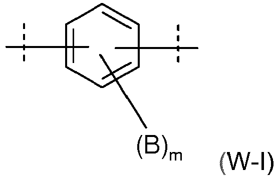 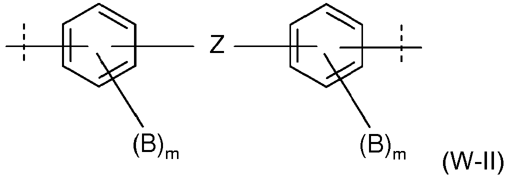 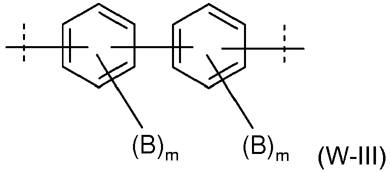 wherein B is a hydrogen of or a fluorine atom and m is an integer from 0 to 4 and
Z is an optionally fluorinated alkylic or aromatic radical.

The term "alkylic radical" is intended to refer to linear, branched or cyclic hydrocarbon chain. The term "fluorinated alkylic radical" refers to an alkylic radical in which some or all of the hydrogen atoms are replaced with fluorine atoms, wherein said chain may be optionally unsaturated and wherein one or more carbon atoms may be replaced by heteroatom(s) such as O or S, preferably O.

The fluorinated alkylic radical is preferably selected from the group consisting of: 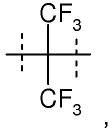 and

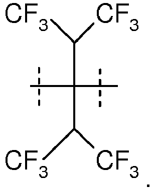

The term "aromatic radical" refers to a radical derived from an aromatic system having 6 to 18 carbon atoms including, but not limited to, phenyl, biphenyl, naphthyl, anthracenyl and the like. The term "fluorinated aromatic radical" refers to aromatic an radical in which some or all of the hydrogen atoms are replaced with one or more of a fluorine atom and a - CF₃ group.

The fluorinated aromatic radical is preferably selected from the group consisting of: 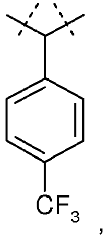 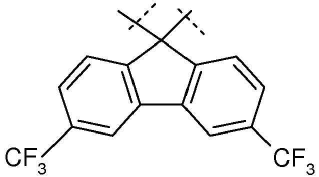 and

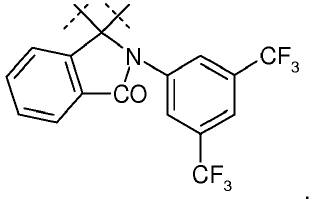

Suitable aromatic groups Ar' and Ar" comprise at least one aromatic mono- or poly-nuclear cycle, such as a phenylene or a naphthylene group.

The at least one aromatic mono- or poly-nuclear cycle may optionally be substituted with at least one substituent selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium.

In a preferred embodiment Ar' and Ar" are equal to each other and are phenylene groups.

In some preferred embodiments, the polymer PAEK is a poly(ether ether ketone) [PEEK]. As used herein, the expression "poly(ether ether ketone)" or PEEK denotes any polymer comprising recurring units (R_{PAEK}) as above defined, wherein W is a group of formula (W-I) as above defined.

Particularly preferred is an embodiment in which PEEK is a polymer having recurring units (R_{PAEK}) of formula:

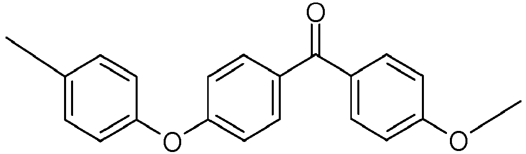

Preferably, PEEK for use in the present invention has a number average molecular weight Mn comprised between 5000 and 200000, preferably between 10000 and 100000 more preferably between 25000 and 75000.

PEEK is notably commercially available as KetaSpire® PEEK from Solvay Specialty Polymers USA, LLC.

### F-PAEK

As used herein, the term "fluorinated alkyl" refers to a linear, branched or cyclic hydrocarbon chain in which some or all of the hydrogen atoms are replaced with fluorine atoms.

The term "fluorinated heteroalkyl" refers to a fluorinated alkyl group in which one or more carbon atoms are replaced by heteroatom(s) such as O or S, preferably O.

In the context of the present application, the term "fluorinated alkyl" or "fluorinated heteroalkyl" may include fluorinated alkyl or fluorinated heteroalkyl that are optionally substituted with halogen or hydroxyl groups or that are optionally unsaturated.

The term "fluorinated aryl" refers to a radical derived from an aromatic system having 6 to 18 carbon atoms including, but not limited to, phenyl, biphenyl, naphthyl, anthracenyl and the like, in which some or all of the hydrogen atoms are replaced with one or more of the following: a fluorine atom, a fluorinated alkyl, a fluorinated heteroalkyl.

In the context of the present application, the term "fluorinated aryl" may include fluorinated aryl optionally substituted with halogen, alkyl, alkenyl, alkynyl, aryl, ether, thioether, carboxylic acid, ester, amide, imide.

Preferably, the fluorinated aryl is selected from:
- a benzene radical wherein at least one hydrogen atom of the benzene ring is substituted with a fluorine atom or with a trifluoromethyl group, such as a 3,5-bis(trifluoromethyl)benzene radical, or
- a styrene radical, wherein at least one hydrogen atom of the benzene ring is substituted with a fluorine atom, more preferably a tetrafluorostyrene radical.

The term "linking chain" refers to a chain constituted by a plurality of atoms connecting the fluorinated moiety Y to the oxygen atom of the hydroxyl group of the reduced PAEK (PAEK-OH).

The term "alkylene" refers to a bivalent group derived from an alkyl moiety by removal of a hydrogen atom from each of two carbon atoms.

The term "arylene" refers to a bivalent group derived from an aryl moiety by removal of a hydrogen atom from each of two ring carbon atoms.

For the purpose of the present invention, the term "low/medium molecular weight fluorinated polymeric or oligomeric moiety" is intended to denote polymers and oligomers comprising recurring units deriving from the polymerization of at least one ethylenically unsaturated fluorinated monomer as well as fluorinated polyethers.

In one embodiment fluorinated polymeric or oligomeic moieties are those comprising recurring units derived from at least one ethylenically unsaturated fluorinated monomer.

Non limiting examples of suitable ethylenically unsaturated fluorinated monomers are:
(a) C₂-C₈ fluoro- and/or perfluoroolefins such as tetrafluoroethylene (TFE), hexafluoropropylene (HFP), pentafluoropropylene and hexafluoroisobutylene;
(b) C₂-C₈ hydrogenated monofluoroolefins such as vinyl fluoride, 1,2-difluoroethylene and trifluoroethylene;
(c) perfluoroalkylethylenes of formula CH₂=CH-R_{f0}, wherein R_{f0} is a C₁-C₆ perfluoroalkyl group;
(d) chloro- and/or bromo- and/or iodo-C₂-C₆ fluoroolefins such as chlorotrifluoroethylene (CTFE);
(e) (per)fluoroalkylvinylethers of formula CF₂=CFOR_{f1}, wherein R_{f1} is a C₁-C₆ fluoro- or perfluoroalkyl group, e.g. -CF₃, -C₂F₅, -C₃F₇;
(f) (per)fluoro-oxyalkylvinylethers of formula CF₂=CFOX₀, wherein Xo is a C₁-C₁₂ oxyalkyl group or a C₁-C₁₂ (per)fluorooxyalkyl group having one or more ether groups, e.g. perfluoro-2-propoxy-propyl group;
(g) fluoroalkyl-methoxy-vinylethers of formula CF₂=CFOCF₂OR_{f2}, wherein R_{f2} is a C₁-C₆ fluoro- or perfluoroalkyl group, e.g. -CF₃, -C₂F₅, -C₃F₇ or a C₁-C₆ (per)fluorooxyalkyl group having one or more ether groups, e.g. - C₂F₅-O-CF₃;
(h) fluorodioxoles of formula : 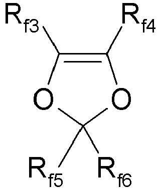 wherein each of R_{f3}, R_{f4}, R_{f5} and R_{f6}, equal to or different from each other, is independently a fluorine atom, a C₁-C₆ fluoro- or per(halo)fluoroalkyl group, optionally comprising one or more oxygen atoms, e.g. -CF₃, -C₂F₅,-C₃F₇, -OCF₃, -OCF₂CF₂OCF₃.

In another embodiment of the present invention, the fluorinated polymeric moieties are fluorinated polyethers comprising at least one (per)fluoropolyether chain [chain (R_{pf})] having two chain ends, wherein at least one of said chain ends bears a group (A), wherein said group (A) is either an aromatic moiety comprising at least one aromatic mono- or poly-nuclear cycle or an aliphatic moiety optionally comprising at least one substituted, optionally unsaturated, linear, branched or cyclic hydrocarbon chain.

Preferably, said chain (R_{pf}) is a chain of formula -(CFX)ₐO(R_{f})(CFX')_{b}-,
wherein
a and b, equal or different from each other, are equal to or higher than 1, preferably from 1 to 10, more preferably from 1 to 3;
X and X', equal or different from each other, are -F or -CF₃,
provided that when a and/or b are higher than 1, X and X' are -F;
(R_{f}) comprises, preferably consists of, repeating units being independently selected from the group consisting of:
(i) -CFXO-, wherein X is F or CF₃;
(ii) -CFXCFXO-, wherein X, equal or different at each occurrence, is F or CF₃, with the proviso that at least one of X is -F;
(iii) -CF₂CF₂CW₂O-, wherein each of W, equal or different from each other, are F, Cl, H;
(iv) -CF₂CF₂CF₂CF₂O-;
(v) -(CF₂)ⱼ-CFZ-O- wherein j is an integer from 0 to 3 and Z is a group of general formula -O-R_{(f-a)}-T, wherein R_{(f-a)} is a fluoropolyoxyalkene chain comprising a number of repeating units from 0 to 10, said recurring units being chosen among the following : -CFXO- , -CF₂CFXO-, -CF₂CF₂CF₂O-, -CF₂CF₂CF₂CF₂O-, with each of each of X being independently F or CF₃ and T being a C₁-C₃ perfluoroalkyl group.

More preferably, a and b, equal or different from each other, are from 1 to 10, even more preferably from 1 to 3.

Preferably, chain (R_{f}) complies with the following formula:

(R_{f}-l) -[(CFX¹O)_{g1}(CFX²CFX³O)_{g2}(CF₂CF₂CF₂O)_{g3}(CF₂CF₂CF₂CF₂O)_{g4}]-

wherein
- X¹ is independently selected from -F and -CF₃,
- X², X³, equal or different from each other and at each occurrence, are independently -F, -CF₃, with the proviso that at least one of X is -F;
- g1, g2 , g3, and g4, equal or different from each other, are independently integers ≥0, such that g1+g2+g3+g4 is in the range from 2 to 300, preferably from 2 to 100; should at least two of g1, g2, g3 and g4 be different from zero, the different recurring units are generally statistically distributed along the chain.

More preferably, chain (R_{f}) is selected from chains of formula:

(R_{f}-IIA) -[(CF₂CF₂O)ₐ₁(CF₂O)ₐ₂]-

wherein:
- a1 and a2 are independently integers ≥ 0 such that the number average molecular weight is between 400 and 10,000, preferably between 400 and 5,000; both a1 and a2 are preferably different from zero, with the ratio a1/a2 being preferably comprised between 0.1 and 10;

(R_{f}-IIB) -[(CF₂CF₂O)_{b1}(CF₂O)_{b2}(CF(CF₃)O)_{b3}(CF₂CF(CF₃)O)_{b4}]-

wherein:
b1, b2, b3, b4, are independently integers ≥ 0 such that the number average molecular weight is between 400 and 10,000, preferably between 400 and 5,000; preferably b1 is 0, b2, b3, b4 are > 0, with the ratio b4/(b2+b3) being ≥1;

(R_{f}-IIC) -[(CF₂CF₂O)_{c1}(CF₂O)_{c2}(CF₂(CF₂)_{cw}CF₂O)_{c3}]-

wherein:
cw = 1 or 2;
c1, c2, and c3 are independently integers ≥ 0 chosen so that the number average molecular weight is between 400 and 10,000, preferably between 400 and 5,000; preferably c1, c2 and c3 are all > 0, with the ratio c3/(c1+c2) being generally lower than 0.2;

(R_{f}-IID) -[(CF₂CF(CF₃)O)_{d}]-

wherein:
d is an integer > 0 such that the number average molecular weight is between 400 and 10,000, preferably between 400 and 5,000;

(R_{f}-IIE) -[(CF₂CF₂C(Hal*)₂O)ₑ₁-(CF₂CF₂CH₂O)ₑ₂-(CF₂CF₂CH(Hal*)O)ₑ₃]-

wherein:
- Hal*, equal or different at each occurrence, is a halogen selected from fluorine and chlorine atoms, preferably a fluorine atom;
- e1, e2, and e3, equal to or different from each other, are independently integers ≥ 0 such that the (e1+e2+e3) sum is comprised between 2 and 300.

Still more preferably, chain (R_{f}) complies with formula (R_{f}-III) here below:

(R_{f}-III) -[(CF₂CF₂O)ₐ₁(CF₂O)ₐ₂]-

wherein:
- a1, and a2 are integers > 0 such that the number average molecular weight is between 400 and 10,000, preferably between 400 and 5,000, with the ratio a1/a2 being generally comprised between 0.1 and 10, more preferably between 0.2 and 5.

According to a preferred embodiment, said chain (R_{pf}) is linked to said at least one group (A) via a linking group [group (L)].

Preferably, said group (L) is a divalent alkyl chain comprising from 1 to 20, more preferably from 2 to 10, carbon atoms and at least one oxygen atom.

More preferably, said group (L) is a chain of formula -CH₂O- or-CH(CF₃)O-.

Said at least one group (A) is typically a group located, preferably via a linking group (L), at the at least one end of the polymeric chain (R_{pf}).

Preferably, group (A) is an aromatic moiety that complies with the following formula (A-I): 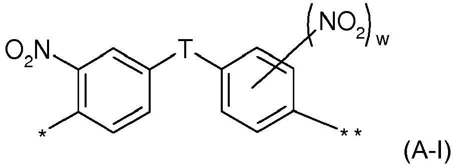 wherein
T is -C(=O)- or -S(=O)₂- ;
w is zero or 1; and
the symbol * indicates the bond with group (L) as defined above;
the symbol ** indicates the bond with LC in formula (I).

It will be apparent to those skilled in the art that when w is zero, the corresponding carbon atom(s) bear(s) a hydrogen atom.

More preferably, said group (A) complies with the following formulae (A-I-i) to (A-I-iv):

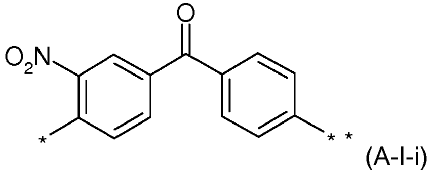

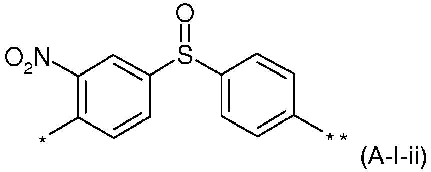

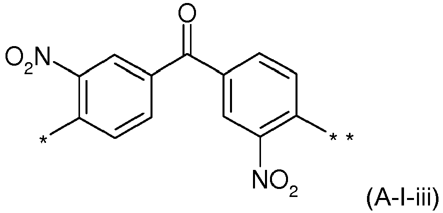

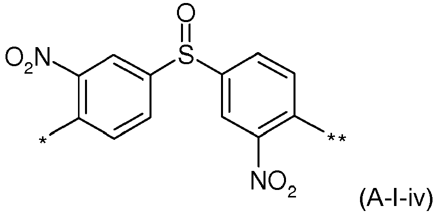

According to a preferred embodiment, the fluorinated moiety Y is a fluorinated polymeric moiety comprising one chain (R_{pf}) having two chain ends, wherein both said chain ends comprise the group (A-I) as defined above.

According to a preferred embodiment, chain (R_{pf}) is mono-functional, i.e. it comprises two chain ends, wherein one chain end comprises said group (A-I) as defined above, and the other chain end comprises a (per)fluorinated alkyl group comprising from 1 to 3 carbon atoms.

According to a more preferred embodiment, chain (R_{pf}) is bi-functional, i.e. it comprises two chain ends, wherein one chain end comprises said group (A-I) as defined above and the second chain end comprises a chain end of the following formula (A-II): 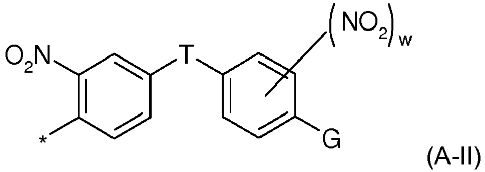 wherein
T is -C(=O)- or -S(=O)₂- ;
w is zero or 1;
G is a group selected from halogen atom or hydroxyl group; and
the symbol * indicates the bond with group (L) as defined above.

According to a further preferred embodiment, chain (R_{pf}) is bi-functional, i.e. it comprises two chain ends, wherein both chain ends comprise said group (A-I) as defined above, both being linked to LC in formula (I).

The applicant has surprisingly found that covalently grafting fluorinated moieties to PAEK allows minimizing the phase separation which is a common drawback when during processing PAEK materials are mixed with fluorinated species.

The invention further pertains to a method for manufacturing the F-PAEK as above detailed, said method comprising:
(i) reducing the ketone groups of a PAEK to hydroxyl groups to obtain a reduced PAEK [PAEK-OH];
(ii) reacting the PAEK-OH obtained in step (i) with a fluorinated compound capable of providing a radical, said fluorinated compound having formula

   Y-LC-X [fluorinated compound (FC)],

   wherein Y and LC are as above defined, and X is a group selected from a halogen atom and a hydroxyl group.

Each recurring unit of PAEK has a ketone group. According to the method of the invention, the ketone groups of PAEK undergo chemical transformation to provide corresponding hydroxyl groups. Said hydroxyl groups may then participate either directly, as a corresponding metal salt, or after being derivatized with an appropriate leaving group, to the reaction with the fluorinated compound (FC) to form a covalent linkage between the oxygen of the PAEK-OH and the fluorinated moiety Y.

The above described method can be carried out starting from a PAEK in the form of powder, in the form of film or as a molded article.

Films and molded articles of PAEK can be manufactured by techniques known in the art.

Reduction step (i) can be carried out according to procedures known in the art.

In principle, any reducing agent that is capable of converting carbonyl groups to hydroxy groups can be used in step (i). Borohydrides are particularly preferred. Such borohydrides include, but are not limited to, sodium borohydride, potassium borohydride, lithium borohydride, sodium cyanoborohydride, sodium triacetoxyborohydride, sodium trimethoxyborohydride, tetramethylammonium borohydride, tetramethylammonium triacetoxyborohydride, tetraethylammonium borohydride, tetrabutylammonium borohydride, tetrabutylammonium cyanoborohydride, cetyltrimethylammonium borohydride, benzyltriethylammonium borohydride, bis(triphenyl-phosphine) copper(I) borohydride, lithium aluminium hydride, dimethylamineborane (DMAB) and mixtures of at least two of these. Preferably, said reducing agent is sodium borohydride.

The extent of the reduction of the PAEK to PAEK-OH may be followed by FT-IR spectroscopy technique, analysing the intensity of the peak related to the ketone groups, which decreases with time indicating the conversion to hydroxyl groups. It may also be followed by nuclear magnetic resonance, ¹H-NMR, ¹³C-NMR and ¹⁹F-NMR, dissolving the samples in chloroform.

The duration of step (i) is usually comprised between 10 min and 10 hours.

In a preferred embodiment wherein the moiety W of PAEK used in step (i) has formula (W-I), the duration of said step (i) is preferably of from 3 to 8 hours.

In another preferred embodiment wherein the moiety W of PAEK used in step (i) has formula (W-II), the duration of said step (i) is preferably of from 10 min to 90 min.

According to the PAEK used as starting material in step (i), the PAEK-OH obtained by the method according to the present invention can be in the form of powder, in the form of film or as a molded article.

PAEK-OH in the form of powder obtained in step (i) can be formed in the form of a film or as a molded article and then subjected to the reaction of step (ii).

For the purpose of the present invention, reduction step (i) can be a partial reduction or a complete reduction, leading, respectively, to a partially or fully reduced PAEK-OH.

As used within the present invention, the term -PAEK-OH is intended to include both partially reduced PAEK-OH and fully reduced PAEK-OH, unless otherwise specified.

Accordingly, PAEK-OH obtained by the method of the present invention is a reduced PAEK that includes at least 1% by moles, preferably more than 40% by moles, more preferably more than 60% by moles, of recurring units of formula (III): 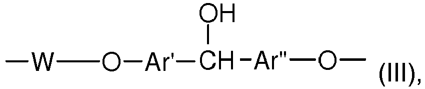 the remaining being recurring units (R_{PAEK}) as above defined.

PAEK-OH obtained in step (i) can be used directly in the following reaction step (ii); alternatively, the hydroxyl group of PAEK-OH formed in the reduction step (i) can be treated with suitable reactants to provide a corresponding metal salt of formula PAEK-O-M⁺, wherein M is an alkaline metal, sodium being preferred, or a derivative of formula PAEK-O-L_{g}, wherein L_{g} is a leaving group such as a sulfonated ester, preferably a sulfonate ester such as C₄F₉SO₃⁻, according to common procedures known to the skilled in the art.

Fluorinated compounds (FC) used in step (ii) are compounds capable of providing radicals of formula Y-LC- when reacting with PAEK-OH directly obtained in step (i), with PAEK-O-M⁺, or with PAEK-O- L_{g}, wherein M and L_{g} are as above defined.

According to a preferred embodiment, the fluorinated compound (FC) is a compound that complies with formula:

Y-LC-X,

wherein Y and LC are as above defined, and
X is a group selected from a halogen atom and a hydroxyl group.

Suitable fluorinated compounds (FC) according to this preferred embodiment are selected from compounds of formula Y-LC-X wherein:
- Y is a fluorinated aryl and LC is absent or is a C(O);
- Y is a low/medium molecular weight fluorinated polymeric or oligomeric moiety, and LC is an alkylene,
and X is a group selected from a halogen atom and a hydroxyl group.

Particularly preferred fluorinated compounds (FC) according to this embodiment are fluorobenzene, trifluoromethylbenzene, 3,5-bis(trifluoromethyl)benzoyl halide and pentafluorostyrene.

F-PAEK obtained by the method of the present invention may be in the form of powder, film or as a molded article.

Additives can be used to enhance or impart particular target properties to F-PAEK, as it is conventionally known in the polymer art, including stabilizers, flame retardants, pigments, plasticizers, surfactants and the like.

In a further approach, the Applicant has surprisingly found that when the fluorinated moiety Y covalently bound to the PAEK includes certain reactive functional groups, the F-PAEK of the present invention, in the form of powder, film or as molded article, can undergo crosslinking when heated (thermal crosslinking) or when subjected to UV-irradiation (photo crosslinking) for a certain time.

Suitable reactive functional groups that can undergo crosslinking are, notably, olefins.

It is thus a further object of the present invention to provide a method for obtaining crosslinked F-PAEK (F-PAEK-XL) by crosslinking a F-PAEK wherein Y is selected from the group consisting of an unsaturated fluorinated alkyl, an unsaturated fluorinated heteroalkyl and a fluorinated aryl substituted with an alkenyl group.

In a preferred embodiment, the F-PAEK-XL is obtained by crosslinking a F-PAEK wherein Y is a styrene radical wherein at least one hydrogen atom of the benzene ring is substituted with a fluorine atom, more preferably a tetrafluorostyrene radical.

Crosslinking can be carried out thermally or via UV-light exposure (photo crosslinking).

Thermal crosslinking can be carried out by heating the F-PAEK at a temperature that may vary from about 150°C to about 400°C, preferably at a temperature of about 300°C, more preferably 200°C. Photo crosslinking may be carried out by exposing a composition coprising F-and at least a photoinitiator, to UV light in the range of 190-400 nm.

Any suitable photoinitiator may be used which is capable of initiating crosslinking of the reactive functional groups upon exposure to UV light.

Non-limiting examples of useful photoinitiators include a benzoine alkyl ether derivative, a benzophenone derivative, an α-aminoalkylphenone type, an oxime ester derivative, a thioxanthone derivative, an anthraquinone derivative, an acylphosphineoxide derivative, a glyoxyester derivative, an organic peroxide type, a trihalomethyltriazine derivative or a titanocene derivative. Specifically, IRGACURE® 651, IRGACURE® 184, DAROCUR® 1173, IRGACURE® 500, IRGACURE® 2959, IRGACURE® 754, IRGACURE® 907, IRGACURE® 369, IRGACURE® 1300, IRGACURE® 819, IRGACURE® 819DW, IRGACURE® 1880, IRGACURE® 1870, DAROCUR® TPO, DAROCUR® 4265, IRGACURE® 784, IRGACURE® OXE01, IRGACURE® OXE02 or IRGACURE® 250 (manufactured by Ciba Specialty Chemicals K.K.), KAYACURE DETX-S, KAYACURE CTX, KAYACURE BMS or KAYACURE 2-EAQ (manufactured by Nippon Kayaku Co., Ltd.), TAZ-101, TAZ-102, TAZ-103, TAZ-104, TAZ-106, TAZ-107, TAZ-108, TAZ-110, TAZ-113, TAZ-114, TAZ-118, TAZ-122, TAZ-123, TAZ-140 or TAZ-204 (manufactured by Midori Kagaku Co., Ltd.) may, for example, be mentioned.

The crosslinking can be verified by determining the glass transition temperature (Tg) of the crosslinked F-PAEK-XL, which markedly increases after the crosslinking reaction.

As mentioned above, the use of any polymeric material depends largely upon their surface properties; surface acts as phase boundary between the bulk polymer and the outer environment. So, it is very important to tune the polymer surface property for a particular target application. The fluorinated PAEK of the present invention may find many applications because it adds the advantages of fluorinated moieties to the highly applicable high performance PAEK.

In a further aspect, thus, the present invention relates to articles comprising a F-PAEK or a F-PAEK-XL that can be used in chemical, electronic and semiconductor industries. F-PAEK and F-PAEK-XL are also suitable for coating surfaces and for fabricating O-rings, V-rings, gaskets and diaphragms.

The invention will be now described in more details with reference to the following examples whose purpose is merely illustrative and not limitative of the scope of the invention.

### EXPERIMENTAL PART

### Raw materials:

PEEK is a standard polyether ether ketone homopolymer with low-medium viscosity and Tm = 172°C, commercially available from Solvay under the name Ketaspire®.

PFPE is a perfluoropolyether of formula

HOCH₂CF₂(CF₂CF₂O)m(CF₂O)nCF₂CH₂OH,

commercially available from Solvay Specialty Polymers Italy S.p.A., wherein m/n > 1; Mn = 3000; Mw = 3050 g/mol; EW = 1605 g/eq.

All other starting materials received from commercial source and used as such without any further purification.

### Thermal analyses

Polymer thermal stability (TGA) was tested using Q500 - TA instruments in N₂ atmosphere with heating rate 20 °C/min.

DSC measurements were performed on a Q2000 - TA instruments in N₂ atmosphere.

### Example 1 Reduction of PEEK powder to obtain PEEK-OH powder

PEEK powder (prior to use, the PEEK powder was washed in refluxing acetone for 14 hrs, washed twice with acetone, and dried under vacuum oven at 100°C for 3-4 hours) (10.0 g, 1 eq.), sodium borohydride (30.0 g, 3 times by weight) and DMSO (200 ml) were charged in the three neck round bottom flask equipped with condenser and nitrogen inlet. The reaction mixture was heated at 120°C for 4 to 5 hours and reaction was monitored by FT-IR spectroscopy (see Table 1). After complete conversion, reaction mass was cooled to room temperature and DMSO was decanted. Powder was washed with methanol (100 mL) for 15 min, in DM water for 15 min, in 0.5 N HCI for 10 min, in water for 10 min, and in methanol for 20 min. Finally, the powder was dried at 100°C under vacuum for 30 min. (% Yield: 10.0g- Quantitative).

**Table 1**

| Reduction time | PEEK-OH (% conversion)* |
|---|---|
| 0 h | 0% |
| 1 h | 58% |
| 2 h | 82% |
| 3 h | 84% |
| 4 h | 92% |
| 5 h | 100% |

| | |
|---|---|
| *ATR-IR was used to analyze the reduction of keto groups of PEEK into hydroxyl groups. The % conversion was calculated as the ratio between the area of carbonyl peak at 1650 cm-1 and the area of the reference band at 1490 cm-1 (C-C stretching of aromatic rings). | |

### Example 2 Reduction of PAEK powder to PAEK-OH

PAEK powder was prepared as follows:
2,2-Bis(4-hydroxyphenyl)hexafluoropropan (65.0 g, 0.193 moles), difluorobenzophenone (43.0 g, 0.197 moles) and K₂CO₃ (40.0 g, 0.290 moles), NMP (400 mL) and toluene (200 mL) were charged in the three neck round bottom flask equipped with condenser, mechanical stirrer and nitrogen inlet. The reaction mixture was heated at 140-150 °C with stirring under a nitrogen atmosphere and reaction was monitored by GPC analysis. Once the desired molecular weight was achieved, reaction mixture was precipitated in water and polymer lumps were thoroughly washed with hot water. For further purification, polymer was dissolved in CH₂Cl₂ and precipitated in methanol, and then dried under the vacuum at 130 °C for overnight.
%Yield: >95%
# GPC: Mn: 9784, MW: 52610, PDI: 5.0
# ¹H NMR (CDCl₃): 7.05-7.10(q, 8H, J=8Hz), 7.38-7.40 (d, 4H, J=8Hz), 7.81-7.83 (d, 4H, J=8Hz).

### PAEK Reduction:

PAEK powder (25.0g, 0.058 moles,1 eq.), sodium borohydride (6.68g, 0.177 moles, 3 Eq.) and THF (200 ml) were charged in the three neck round bottom flask equipped with condenser and nitrogen inlet. The reaction mixture was heated at 60 °C for 20 min to 1 h and reaction was monitored by FT-IR spectroscopy. After reaching required conversion, reaction mass was cooled to the room temperature and precipitated in methanol. Powder was washed with fresh methanol (100 ml) for 15 min, in DM water for 15 min, in 0.5 N HCI for 10 min, in water for 10 min, and in methanol for 20 min. Finally , the powder was dried at 100°C under vacuum for 30 min to obtain 25.0 g-of partially reduced PAEK-OH (60% conversion).
%Yield: 95%
# GPC: Mn: 8646, MW: 42452, PDI: 4.9
# ¹H NMR (CDCl₃): 5.86 (s, 1H), 6.95-6.97 (d, 4H, J=8Hz), 7.04-7.06 (d, 4H, J=8Hz), 7.34-7.45 (m, 8H).

### Example 3 Synthesis of fluorinated polyether having formula :

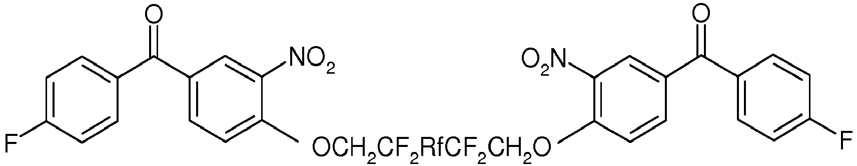

**wherein R_{f} = (CF₂CF₂O)ₘ(CF₂O)ₙ; m/n >1; Mₙ = 3000**

A round-bottomed glass reactor, equipped with a mechanical stirrer, a reflux condenser (the refrigerant liquid was Galden®HT-110 - obtained from Solvay Specialty Polymers Italy S.p.A.) with an inert gas (N₂) compensator on top, a dripping funnel and an internal thermometer, was charged with anhydrous PFPE (584 g; 369 mmols; 677 meq). The mechanical stirrer was turned on to about 300 rpm, the PFPE was heated to 45°C and a 9.56 w/v solution of tBuOK/tBuOH (795 ml; 677 mmol tBuOK) was dripped at a rate of 300 mmol/h. The temperature was raised to about 57°C and kept with stirring for 2 hours. The solution thus obtained was stripped with 90% v/v of tBuOH to obtain a clear to yellowish oil.

Then, 3-nitro-4,4'-difluorobenzophenone (403 g; 147mols) was dissolved in hexafluoroxylene (HFX - 2000 mL) in about 1 hour at 50°C with mild stirring. A yellow homogeneous solution was obtained.

Then, the oil comprising the PFPE was dripped in the solution of 3-nitro-4,4'-difluorobenzophenone at 75°C and at a rate of about 100 mmol/h with 300 rpm mechanical stirring. During the addition of PFPE the internal reaction temperature was raised to about 110°C (the reflux temperature of residual t-BuOH in HFX) with 300 rpm mechanical stirring, for a total reaction time of 5 hours. A first aliquot of t-BuOK (203 mmol) was added with a solid dispenser in the crude reaction mixture at a rate of 400 mmol/h. A second aliquot t-BuOK (101 mmol) was added after 20 hrs of reaction time and a third aliquot (50 mmol) was added after 27 hrs of total reaction time. At this point, the termination of the end-capping reaction was aided by adding 10 mol% of the starting molar amount of 3-nitro-4-fluorobenzophenone (13 grams; 44.3 mmol; solid dispenser). The conversion of the pre-terminals was followed by ¹⁹F-NMR.

The crude reaction mixture was first cooled to room temperature and then centrifuged (10000 rpm; 25°C; 60 min) in order to separate the residual solid particulates, comprising mainly unreacted t-BuOK and 3-nitro-4,4'-difluorobenzophenone.

The centrifuged surnatant was transferred to a separatory funnel and was washed 2 times with aqueous 10% H₃O⁺Cl⁻ (1:0.5 v/v organic:water). The washing was considered completed when the final pH of the H₂O layer was below 3.

The washed crude mixture was then dried over MgSO₄, filtered with 5 µm PTFE membrane, and the solvent evaporated first at 70°C and 0.1 mm Hg residual P (employing a Rotavapor) and then at 100°C and 0,07 P_{RES} with a mechanical pump in order to sublime most of the residual, unreacted 4-fluorobenzophenone as well as unreacted 3-nitro-4,4'-difluorobenzophenone.

Isolated yield = 86 mol% of a dark viscous liquid
Average MW = 3664 g/mol
EW= 1928 g/eq.
PFPE segment average MW = 3116 g/mol.

Formation of F- ions during the reaction indicates the covalent attachment of PFPE to the PEEK. The presence of F- ions in the reaction mixture was determined by F- ion selective electrode (AgNO₃ titration method):
F- ions (ppm) = 256;
F- ions (mg) = 281.6 mg;
Theoretical F- ions (mg) = 484 mg.

### Example 4: Grafting of fluorinated polyether to PEEK powder

PEEK-ONa powder obtained as in Example 1 (before protonation) was washed three times with fresh DMSO. Then, sulfolane (100 mL) and the fluorinated polyether obtained as in Example 3 (12.0 g, 5.1 mmol) in hexafluoroxylene (HFX) were added. The reaction mixture was initially heated at 120°C for 1 hour and then 170 °C for 4-5 hrs. After that sulfolane was distilled off under the reduce pressure at 140 °C and washed with DM water (400 mL), methanol (100 X 2 mL), and HFX (100 mL) for 2-3 hrs. Resulting polymer powder was dried under vacuum oven at 100 °C for 4-5 hrs. (% Yield: 11.0 g - 50%)

### Example 5: Reduction of PEEK film

A similar procedure was adopted for the reduction of PEEK film as described in example 1 above for PEEK powder. In Table 2 the % conversion vs time is reported.

**Table 2**

| Reduction time | PEEK-OH (% conversion)* |
|---|---|
| 0 h | 0% |
| 1 h | 16% |
| 2 h | 39% |
| 4.5 h | 90% |

| | |
|---|---|
| *ATR-IR was used to analyze the reduction of keto groups of PEEK into hydroxyl groups. The % conversion was calculated as the ratio between the area of carbonyl peak at 1650 cm-1 and the area of the reference band at 1490 cm-1 (C-C stretching of aromatic rings). | |

### Example 6: Grafting of fluorinated polyether to PEEK-ONa film:

A similar procedure was adopted for grafting as described in example 4 above.

### Example 7: Grafting of pentafluorostyrene to PEEK-ONa film:

PEEK-ONa films (1.8 g, 0.00530 mol, PEEK-OH-70% reduced as per IR), pentafluorostyrene (10.0 g, 0.053 moles) and THF (10 mL) were charged in the two neck round bottom flask equipped with condenser and nitrogen inlet. The reaction mixture was heated at 60°C for 16 hrs. Then, reaction mass was poured in DM water and resulting polymer was washed with methanol (100 X 2 mL). Polymer was dried under the vacuum at 100 °C for 4-5 hrs. (% Yield: 1.7 g - Quantitative).

### Example 8: Grafting of hexafluorotoluene to PEEK-ONa film:

PEEK-ONa films (1.8 g, 0.00530 mol, PEEK-OH-70% reduced as per IR), hexafluorotoluene (4.24 g, 0.0212 moles) and DMSO (10 mL) were charged in the two neck round bottom flask equipped with condenser and nitrogen inlet. The reaction mixture was heated at 100 °C for 16 hrs. Then, reaction mass was poured in DM water and resulting polymer was washed with methanol (100 X 2 mL). Polymer was dried under the vacuum at 100 °C for 4-5 hrs. (% Yield: 1.7 g - Quantitative).

### Example 9: Grafting of octafluorotoluene to PEEK-ONa film:

A similar procedure was adopted for grafting as described in example 8 above.

### Example 10: Grafting of pentafluorostyrene to PEEK-OH (film and powder)

Partially reduced PEEK-OH films/powder (0.5 g, 0.00148 mol, PEEK-OH 70% reduced as per IR), NaH (0.043 g, 0.00178 mol) and THF (10 mL) were charged in the two neck round bottom flask equipped with condenser and nitrogen inlet. The reaction mixture was stirred at room temperature for few minutes and then pentafluorostyrene (0.431g, 0.0022 moles) was slowly added. The reaction mass was heated at 60 °C for 16 hours. Then, reaction mass was poured in demineralized water (400 mL) and the resulting polymer was washed with methanol (100 X 2 mL). The polymer was dried under the vacuum at 100 °C for 4-5 hrs. (% Yield: 0.5 g - Quantitative).

### Example 11: Grafting of 3,5-bis(trifluoromethyl)benzoyl chloride to PEEK-OH powder

Partially reduced PEEK-OH powder (0.5 g, 0.00148 mol, PEEK-OH 70% reduced as per IR),3,5-bis(trifluoromethyl)benzoyl chloride (1.2 g, 0.0044 mol) and CH₂Cl₂ (15 mL) were charged in a two neck round bottom flask equipped with condenser and nitrogen inlet. Triethylamine (2.24 g, 0.0222 mol) was slowly added to the reaction mixture and stirred for 16 hours at room temperature. Then, the reaction mass was poured in demineralized water (400 mL) and the resulting polymer was washed with methanol (100 X 2 mL). The polymer was dried under the vacuum at 100 °C for 4-5hrs.
(% Yield: 0.6 g -71%).

### Example 12: Grafting pentafluorostyrene to PAEK-OH (powder) of example 2

A similar procedure was adopted for grafting as described in example 10 above.

### Example 13: Contact angle measurements of PEEK-OH film grafted with fluorinated polyether

Contact angle measurements were performed on PFPE grafted PEEK films by using a DataPhysics - OCA 20 instrument. Water and *n-*hexadecane solvent were used as reference solvents for measuring hydrophobicity and oleophobicity respectively with a dosing volume 2 µL. Contact angle measurement data is shown in Table 3. PFPE grafted PEEK surface displayed high hydrophobicity and oleophobicity as compared to the original PEEK films and improvement in the contact angle is dependent on the amount of PFPE loading on the surface of PEEK.

**Table 3**

| Example | Contact angle (AVG) | |
|---|---|---|
| | Water | Hexadecane |
| Example 6 | 128 | 51 |
| Example 7 | 78 | 21 |
| Example 8 | 102 | 19 |
| Example 9 | 100 | 29 |

## Claims

1. A fluorinated PAEK [F-PAEK] wherein at least 1% moles of the recurring units are recurring units of formula (I), 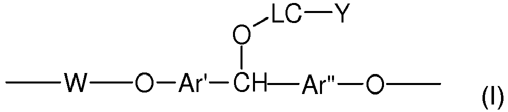 the remaining recurring units having formula (R_{PAEK}) 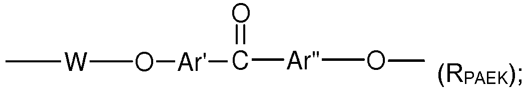
Ar' and Ar", equal to or different from each other, are aromatic groups;
W is an aromatic group selected from groups of formulae (W-I) to (W-III): 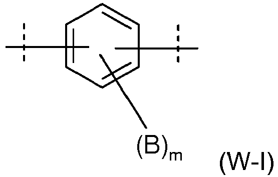 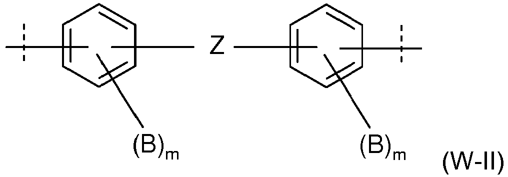 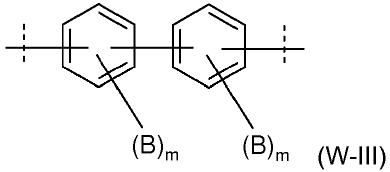
wherein B is a hydrogen of or a fluorine atom and m is an integer from 0 to 4;
Z is an optionally fluorinated alkylic or aromatic radical.
Y is at least one fluorinated moiety selected from the group consisting of fluorinated alkyl, fluorinated heteroalkyl, fluorinated aryl or a low/medium molecular weight fluorinated polymeric or oligomeric moiety;
LC is absent or is a linking chain consisting of one or more of the following, connected together: -C(O)-, alkylene or arylene;
with the proviso that when W is an aromatic radical of formula (W-I) and LC is alkylene, Y cannot be a fluorinated alkyl group.

2. The F-PAEK according to claim 1 wherein at least 10% by moles, preferably at least 40% by moles, more preferably at least 60% by moles, of recurring units are recurring units of formula (I).

3. The F-PAEK according to anyone of claims 1 or 2 wherein Y is selected from the group consisting of an unsaturated fluorinated alkyl, an unsaturated fluorinated heteroalkyl and a fluorinated aryl substituted with an alkenyl group.

4. The F-PAEK according to anyone of claims 1 or 2 wherein the fluorinated aryl is selected from the group consisting of:
- a benzene radical wherein at least one hydrogen atom of the benzene ring is substituted with a fluorine atom or with a trifluoromethyl group, such as a 3,5-bis(trifluoromethyl)benzene radical, or
- a styrene radical, wherein at least one hydrogen atom of the benzene ring is substituted with a fluorine atom.

5. The F-PAEK according to claim 4 wherein the styrene radical is tetrafluorostyrene radical.

6. The F-PAEK according to anyone of claims 1 or 2 wherein the low/medium molecular weight fluorinated polymeric or oligomeric moiety is a polymeric or oligomeric moiety comprising recurring units derived from at least one ethylenically unsaturated fluorinated monomer.

7. The F-PAEK according to anyone of claims 1 or 2 wherein the low/medium molecular weight fluorinated polymeric or oligomeric moiety is a fluorinated polyether comprising at least one (per)fluoropolyether chain [chain (R_{pf})] having two chain ends, wherein at least one of said chain ends bears agroup (A), wherein group (A) is either an aromatic moiety comprising at least one aromatic mono- or poly-nuclear cycle or an aliphatic moiety comprising at least one optionally substituted, optionally unsaturated, linear, branched or cyclic hydrocarbon chain, said chain (R_{pf}) being linked to said at least one group (A) via a linking group [group (L)], wherein said group (L) is a divalent alkyl chain comprising from 1 to 20, more preferably from 2 to 10, carbon atoms and at least one oxygen atom.

8. The F-PAEK according to claim 7 wherein chain (R_{pf}) is a chain of formula -(CFX)ₐO(R_{f})(CFX')_{b}-, wherein
a and b, equal or different from each other, are equal to or higher than 1, preferably from 1 to 10, more preferably from 1 to 3;
X and X', equal or different from each other, are -F or -CF₃,
provided that when a and/or b are higher than 1, X and X' are -F;
(R_{f}) comprises, preferably consists of, repeating units being independently selected from the group consisting of:
(i) -CFXO-, wherein X is F or CF₃;
(ii) -CFXCFXO-, wherein X, equal or different at each occurrence, is F or CF₃, with the proviso that at least one of X is -F;
(iii) -CF₂CF₂CW₂O-, wherein each of W, equal or different from each other, are F, Cl, H;
(iv) -CF₂CF₂CF₂CF₂O-;
(v)-(CF₂)ⱼ-CFZ-O- wherein j is an integer from 0 to 3 and Z is a group of general formula -O-R_{(f-a)}-T, wherein R_{(f-a)} is a fluoropolyoxyalkene chain comprising a number of repeating units from 0 to 10, said recurring units being chosen among the following : -CFXO- , -CF₂CFXO-, -CF₂CF₂CF₂O-, - CF₂CF₂CF₂CF₂O-, with each of each of X being independently F or CF₃ and T being a C₁-C₃ perfluoroalkyl group.

9. The F-PAEK according to claim 7 wherein group (A) is an aromatic moiety that complies with the following formula (A-I): 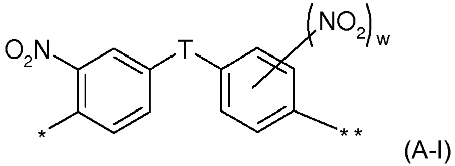 wherein
T is -C(=O)- or -S(=O)₂- ;
w is zero or 1; and
the symbol * indicates the bond with group (L) as defined above;
the symbol ** indicates the bond with LC in formula (I).

10. A method for manufacturing the F-PAEK according to anyone of claims 1 to 9, said method comprising:
(i) reducing the ketone groups of a PAEK to hydroxyl groups to obtain a reduced PAEK [PAEK-OH];
(ii) reacting the PAEK-OH obtained in step (i) with a fluorinated compound capable of providing a radical, said fluorinated compound having formula
Y-LC-X [fluorinated compound (FC)],
wherein Y is at least one fluorinated moiety selected from the group consisting of fluorinated alkyl, fluorinated heteroalkyl, fluorinated aryl or a low/medium molecular weight fluorinated polymeric or oligomeric moiety; LC is absent or is a linking chain comprising one or more of the following, connected together: -C(O)-, alkylene or arylene; and X is a group selected from a halogen atom and a hydroxyl group.

11. The method according to claim 10 wherein the PAEK is PEEK.

12. The method according to anyone of claims 10 or 11 wherein the PAEK is in the form of powder or film or a molded part.

13. An article comprising the F-PAEK according to anyone of claims 1 to 9.

14. A method for obtaining crosslinked F-PAEK (F-PAEK-XL) by crosslinking a F-PAEK according to claim 3.

15. An article comprising the F-PAEK-XL according to claim 14.

## Patentansprüche

1. Fluoriertes PAEK [F-PAEK], wobei wenigstens 1 mol-% der Wiederholungseinheiten Wiederholungseinheiten der Formel (I) sind, 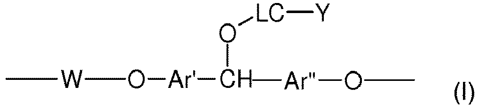 wobei die restlichen Wiederholungseinheiten die Formel (R_{PAEK}) aufweisen, 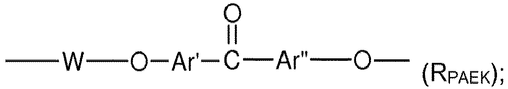
wobei Ar' und Ar", gleich oder voneinander verschieden, aromatische Gruppen sind;
W eine aromatische Gruppe ausgewählt aus Gruppen der Formeln (W-I) bis (W-III) ist: 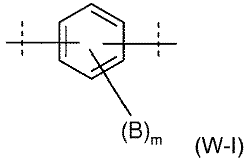 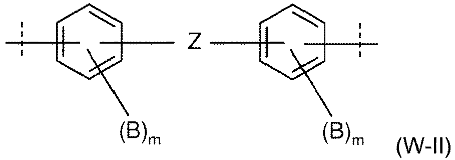 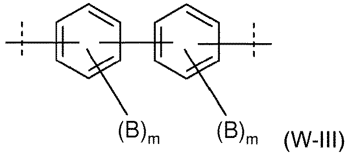
wobei B ein Wasserstoff oder ein Fluoratom ist und m eine ganze Zahl von 0 bis 4 ist;
Z ein gegebenenfalls fluorierter Alkyl- oder aromatischer Rest ist;
Y wenigstens eine fluorierte Einheit ausgewählt aus der Gruppe bestehend aus fluoriertem Alkyl, fluoriertem Heteroalkyl, fluoriertem Aryl und einer fluorierten polymeren oder oligomeren Einheit mit niedrigem/mittlerem Molekulargewicht ist;
LC nicht vorhanden ist oder eine Verknüpfungskette ist, die aus einem oder mehreren des Folgenden, miteinander verbunden, besteht: -C(O)-, Alkylen und Arylen;
mit der Maßgabe, dass, wenn W ein aromatischer Rest der Formel (W-I) ist und LC Alkylen ist, Y keine fluorierte Alkylgruppe sein kann.

2. F-PAEK gemäß Anspruch 1, wobei wenigstens 10 mol-%, vorzugsweise wenigstens 40 mol-%, bevorzugter wenigstens 60 mol-%, der Wiederholungseinheiten Wiederholungseinheiten der Formel (I) sind.

3. F-PAEK gemäß einem der Ansprüche 1 oder 2, wobei Y ausgewählt ist aus der Gruppe bestehend aus einem ungesättigten fluorierten Alkyl, einem ungesättigten fluorierten Heteroalkyl und einem fluorierten Aryl, das mit einer Alkenylgruppe substituiert ist.

4. F-PAEK gemäß einem der Ansprüche 1 oder 2, wobei das fluorierte Aryl ausgewählt ist aus der Gruppe bestehend aus:
- einem Benzolrest, wobei wenigstens ein Wasserstoffatom des Benzolrings mit einem Fluoratom oder mit einer Trifluormethylgruppe substituiert ist, wie z. B. ein 3,5-Bis(trifluormethyl)benzolrest, oder
- einem Styrolrest, wobei wenigstens ein Wasserstoffatom des Benzolrings mit einem Fluoratom substituiert ist.

5. F-PAEK gemäß Anspruch 4, wobei der Styrolrest ein Tetrafluorstyrolrest ist.

6. F-PAEK gemäß einem der Ansprüche 1 oder 2, wobei die fluorierte polymere oder oligomere Einheit mit niedrigem/mittlerem Molekulargewicht eine polymere oder oligomere Einheit ist, die Wiederholungseinheiten umfasst, die von wenigstens einem ethylenisch ungesättigten fluorierten Monomer abgeleitet sind.

7. F-PAEK gemäß einem der Ansprüche 1 oder 2, wobei die fluorierte polymere oder oligomere Einheit mit niedrigem/mittlerem Molekulargewicht ein fluorierter Polyether ist, der wenigstens eine (Per)fluorpolyetherkette [Kette (R_{pf})] umfasst, die zwei Kettenenden aufweist, wobei wenigstens eines der Kettenenden eine Gruppe (A) trägt, wobei die Gruppe (A) entweder eine aromatische Einheit, die wenigstens einen aromatischen ein- oder mehrkernigen Zyklus umfasst, oder eine aliphatische Einheit, die wenigstens eine gegebenenfalls substituierte, gegebenenfalls ungesättigte, lineare, verzweigte oder cyclische Kohlenwasserstoffkette umfasst, ist, wobei die Kette (R_{pf}) über eine Verknüpfungsgruppe [Gruppe (L)] an die wenigstens eine Gruppe (A) gebunden ist, wobei die Gruppe (L) eine zweiwertige Alkylkette ist, die von 1 bis 20, bevorzugter von 2 bis 10, Kohlenstoffatome und wenigstens ein Sauerstoffatom umfasst.

8. F-PAEK gemäß Anspruch 7, wobei die Kette (R_{pf}) eine Kette der Formel -(CFX)ₐO(R_{f}) (CFX')_{b}- ist, wobei
a und b, gleich oder voneinander verschieden, gleich oder größer als 1 sind, vorzugsweise von 1 bis 10, bevorzugter von 1 bis 3, betragen;
X und X', gleich oder voneinander verschieden, -F oder -CF₃ sind;
mit der Maßgabe, dass, wenn a und/oder b größer als 1 sind, X und X' -F sind;
(R_{f}) Wiederholungseinheiten umfasst, vorzugsweise daraus besteht, die unabhängig ausgewählt sind aus der Gruppe bestehend aus:
(i) -CFXO-, wobei X F oder CF₃ ist;
(ii) -CFXCFXO-, wobei X, bei jedem Auftreten gleich oder verschieden, F oder CF₃ ist, mit der Maßgabe, dass wenigstens ein X -F ist;
(iii) -CF₂CF₂CW₂O-, wobei jedes W, gleich oder voneinander verschieden, F, Cl, H ist;
(iv) -CF₂CF₂CF₂CF₂O-;
(v) -(CF₂)ⱼ-CFZ-O-, wobei j eine ganze Zahl von 0 bis 3 ist und Z eine Gruppe der allgemeinen Formel -O-R_{(f-a)}-T ist, wobei R_{(f-a)} eine Fluorpolyoxyalkenkette ist, die eine Anzahl von Wiederholungseinheiten von 0 bis 10 umfasst, wobei die Wiederholungseinheiten ausgewählt sind aus den folgenden: -CFXO-, -CF₂CFXO-, -CF₂CF₂CF₂O-, -CF₂CF₂CF₂CF₂O-, wobei jedes X unabhängig F oder CF₃ ist und T eine C₁-C₃-Perfluoralkylgruppe ist.

9. F-PAEK gemäß Anspruch 7, wobei die Gruppe (A) eine aromatische Einheit ist, die der folgenden Formel (A-I) entspricht: 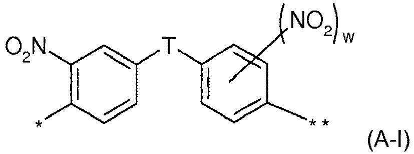 wobei
T -C(=O) oder -S(=O)₂- ist;
w null oder 1 ist; und
das Symbol * die Bindung mit der wie vorstehend definierten Gruppe (L) anzeigt;
das Symbol ** die Bindung mit LC in Formel (I) anzeigt.

10. Verfahren zur Herstellung des F-PAEK gemäß einem der Ansprüche 1 bis 9, wobei das Verfahren umfasst:
(i) Reduzieren der Ketongruppen eines PAEK zu Hydroxygruppen, um ein reduziertes PAEK [PAEK-OH] zu erhalten;
(ii) Umsetzen des bei Schritt (i) erhaltenen PAEK-OH mit einer fluorierten Verbindung, die fähig ist, ein Radikal bereitzustellen, wobei die fluorierte Verbindung die Formel
Y-LC-X [fluorierte Verbindung (FC)]
aufweist, wobei Y wenigstens eine fluorierte Einheit ausgewählt aus der Gruppe bestehend aus fluoriertem Alkyl, fluoriertem Heteroalkyl, fluoriertem Aryl und einer fluorierten polymeren oder oligomeren Einheit mit niedrigem/mittlerem Molekulargewicht ist; LC nicht vorhanden ist oder eine Verknüpfungskette ist, die aus einem oder mehreren des Folgenden, miteinander verbunden, besteht: -C(O)-, Alkylen und Arylen; und X eine Gruppe ausgewählt aus einem Halogenatom und einer Hydroxygruppe ist.

11. Verfahren gemäß Anspruch 10, wobei das PAEK PEEK ist.

12. Verfahren gemäß einem der Ansprüche 10 und 11, wobei das PAEK in der Form von Pulver oder Film oder eines Formkörpers vorliegt.

13. Gegenstand, umfassend das F-PAEK gemäß einem der Ansprüche 1 bis 9.

14. Verfahren zur Herstellung von vernetztem F-PAEK (F-PAEK-XL) durch Vernetzen eines F-PAEK gemäß Anspruch 3.

15. Gegenstand, umfassend das F-PAEK-XL gemäß Anspruch 14.

## Revendications

1. PAEK fluoré [F-PAEK] dans lequel au moins 1 % en moles des motifs récurrents sont des motifs récurrents de formule (I), 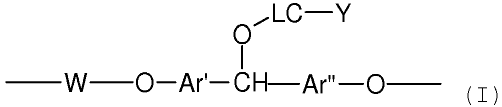 les motifs récurrents restants ayant la formule (R_{PAEK}) 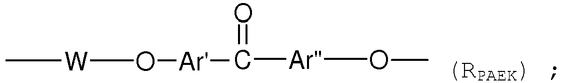
Ar' et Ar", identiques ou différents l'un de l'autre, sont des groupes aromatiques ;
W est un groupe aromatique choisi parmi des groupes de formules (W-I) à (W-III) : 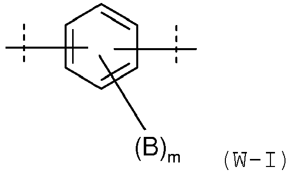 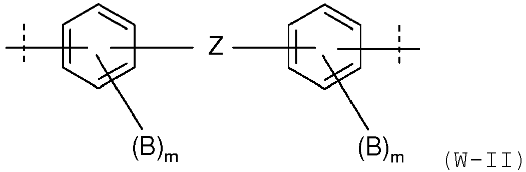 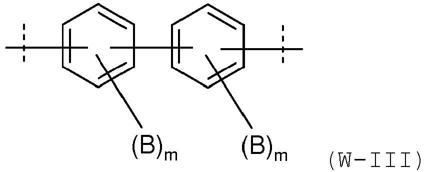
où B est un hydrogène ou un atome de fluor et m est un entier de 0 à 4 ;
Z est un radical alkyle ou aromatique facultativement fluoré ;
Y est au moins un fragment fluoré choisi dans le groupe constitué d'alkyle fluoré, hétéroalkyle fluoré, aryle fluoré ou un fragment polymère ou oligomère de poids moléculaire faible/moyen ;
LC est absent ou est une chaîne de liaison constituée d'un ou plusieurs des suivants, conjointement reliés : -C(O)-, alkylène ou arylène ;
à condition que, lorsque W est un radical aromatique de formule (W-I) et LC est alkylène, Y ne peut pas être un groupe alkyle fluoré.

2. F-PAEK selon la revendication 1 dans lequel au moins 10 % en moles, de préférence au moins 40 % en moles, plus préférablement au moins 60 % en moles, de motifs récurrents sont des motifs récurrents de formule (I).

3. F-PAEK selon l'une quelconque des revendications 1 ou 2 dans lequel Y est choisi dans le groupe constitué d'un alkyle fluoré insaturé, d'un hétéroalkyle fluoré insaturé et d'un aryle fluoré substitué par un groupe alcényle.

4. F-PAEK selon l'une quelconque des revendications 1 ou 2 dans lequel l'aryle fluoré est choisi dans le groupe constitué de :
- un radical benzénique dans lequel au moins un atome d'hydrogène du cycle benzénique est substitué par un atome de fluor ou par un groupe trifluorométhyle, tel qu'un radical 3,5-bis(trifluorométhyl)benzène, ou
- un radical styrénique, dans lequel au moins un atome d'hydrogène du cycle benzénique est substitué par un atome de fluor.

5. F-PAEK selon la revendication 4 dans lequel le radical styrénique est le tétrafluorostyrène.

6. F-PAEK selon l'une quelconque des revendications 1 ou 2 dans lequel le fragment polymère ou oligomère de poids moléculaire faible/moyen est un fragment polymère ou oligomère comprenant des motifs récurrents dérivés d'au moins un monomère fluoré éthyléniquement insaturé.

7. F-PAEK selon l'une quelconque des revendications 1 ou 2 dans lequel le fragment polymère ou oligomère de poids moléculaire faible/moyen est un polyéther fluoré comprenant au moins une chaîne (per)fluoropolyéther [chaîne (R_{pf})] ayant deux extrémités de chaîne, dans lequel au moins une desdites extrémités de chaîne porte un groupe (A), dans lequel le groupe (A) est un fragment aromatique comprenant au moins un cycle mono- ou polynucléaire aromatique ou un fragment aliphatique comprenant au moins une chaîne hydrocarbonée linéaire, ramifié ou cyclique, facultativement insaturée, facultativement substituée, ladite chaîne (R_{Pf}) étant liée audit au moins un groupe (A) par l'intermédiaire d'un groupe de liaison [groupe (L)], dans lequel ledit groupe (L) est une chaîne alkyle divalente comprenant de 1 à 20, plus préférablement de 2 à 10, atomes de carbone et au moins un atome d'oxygène.

8. F-PAEK selon la revendication 7 dans lequel la chaîne (R_{Pf}) est une chaîne de formule -(CFX)ₐO(R_{f}) (CFX')_{b}-, dans laquelle a et b, égaux ou différents l'un de l'autre, sont égaux ou supérieurs à 1, de préférence de 1 à 10, plus préférablement de 1 à 3 ;
X et X', identiques ou différents l'un de l'autre, sont -F ou -CF₃,
à condition que, lorsque a et/ou b sont supérieurs à 1, X et X' soient -F ;
(R_{f}) comprend, de préférence est constitué de, motifs répétitifs étant indépendamment choisis dans le groupe constitué de :
(i) -CFXO-, dans lequel X est F ou CF₃ ;
(ii) -CFXCFXO-, dans lequel X, identique ou différent à chaque occurrence, est F ou CF₃, à condition qu'au moins l'un des X soit -F ;
(iii) -CF₂CF₂CW₂O-, dans lequel chacun des W, identiques ou différents les uns des autres, est F, Cl, H ;
(iv) -CF₂CF₂CF₂CF₂O- ;
(v) -(CF₂)ⱼ-CFZ-O- dans lequel j est un entier de 0 à 3 et Z est un groupe de formule générale -O-R_{(f-a)}-T, dans lequel R_{(f-a)} est une chaîne fluoropolyoxyalcène comprenant un nombre de motifs répétitifs de 0 à 10, lesdits motifs récurrents étant choisis parmi les suivants : -CFXO-, -CF₂CFXO-, -CF₂CF₂CF₂O-, -CF₂CF₂CF₂CF₂O-, chacun des X étant indépendamment F ou CF₃ et T étant un groupe perfluoroalkyle en C₁-C₃.

9. F-PAEK selon la revendication 7 dans lequel le groupe (A) est un fragment aromatique qui est conforme à la formule (A-I) suivante : 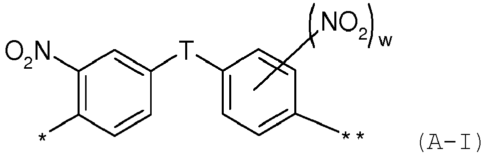 dans laquelle
T est -C(=O)- ou -S(=O)₂- ;
w est zéro ou 1 ; et
le symbole * indique la liaison au groupe (L) tel que défini ci-dessus ;
le symbole ** indique la liaison à LC dans la formule (I).

10. Procédé de fabrication du F-PAEK selon l'une quelconque des revendications 1 à 9, ledit procédé comprenant :
(i) la réduction des groupes cétone d'un PAEK en groupes hydroxyle pour obtenir un PAEK réduit [PAEK-OH] ;
(ii) la réaction du PAEK-OH obtenu dans l'étape (i) avec un composé fluoré capable de fournir un radical, ledit composé fluoré ayant la formule Y-LC-X [composé fluoré (FC)],
dans lequel Y est au moins un fragment fluoré choisi dans le groupe constitué d'alkyle fluoré, hétéroalkyle fluoré, aryle fluoré ou un fragment polymère ou oligomère de poids moléculaire faible/moyen ;
LC est absent ou est une chaîne de liaison comprenant l'un ou plusieurs des suivants, reliés conjointement : -C(O)-, alkylène ou arylène ; et X est un groupe choisi parmi un atome d'halogène et un groupe hydroxyle.

11. Procédé selon la revendication 10 dans lequel le PAEK est PEEK.

12. Procédé selon l'une quelconque des revendications 10 ou 11 dans lequel le PAEK est sous forme de poudre ou de film ou d'une pièce moulée.

13. Article comprenant le F-PAEK selon l'une quelconque des revendications 1 à 9.

14. Procédé d'obtention d'un F-PAEK réticulé (F-PAEK-XL) par réticulation d'un F-PAEK selon la revendication 3.

15. Article comprenant le F-PAEK-XL selon la revendication 14.
